# EUROPEAN PATENT APPLICATION

(11) **EP 2 080 690 A1**
(43) Date of publication of application: **22.07.2009**
(21) Application number: 07830825.1
(22) Date of filing: 30.10.2007
(51) Int. Cl.: B62D 25/08, B60K 11/04

(54) **STRUCTURE FOR SUPPORTING HEAT EXCHANGER, AND VEHICLE FRONT STRUCTURE**

(30) Priority: 01.11.2006 JP 2006297984; 09.05.2007 JP 2007124674
(71) Applicant: Calsonic Kansei Corporation, Saitama-shi Saitama 331-8501 (JP)
(72) Inventor: YOSHIMITSU, Masaki c/o CALSONIC KANSEI CORPORATION, Saitama 3318501 (JP); OGAWA, Jun c/o CALSONIC KANSEI CORPORATION, Saitama 3318501 (JP)
(74) Representative: Oxley, Robin John George
(86) International application number: PCT/JP2007/071091
(87) International publication number: WO 2008/053874

(57) **Abstract**

A heat exchanger supporting structure supports a heat exchanger (a radiator 2) on a vehicle body at a vehicle front side. The heat exchanger (the radiator 2) is capable of moving a predetermined distance toward a vehicle rear side, maintaining a support state relative to a vehicle body, when external force acts on the heat exchanger from the vehicle front side.

## Description

### [TECHNICAL FIELD]

The present invention relates to a heat exchanger supporting structure and also to a vehicle front structure.

### [BACKGROUND OF THE INVENTION]

Japanese Patent Application Laid-Open Publication No. 2004 - 322837 discloses technology of a heat exchanger supporting structure and a vehicle front structure in which the radiator core support supporting a heat exchanger is fixed to a bumper armature so that the radiator core support and the heat exchanger move rearward together with the bumper armature in a case of vehicle crash. In the conventional heat exchanger supporting structure and vehicle front structure, the heat exchanger is normally installed on the radiator core support in a state where the heat exchanger is disposed at a side of a motor vehicle as rear as possible, allowing for a problem in that the heat exchanger would easily damaged together with the bumper armature that deforms rearward in a case of vehicle collision.

### [DISCLOSURE OF THE INVENTION]

### [PROBLEM(S) TO BE SOLVED BY THE INVENTION]

However, in the conventional heat exchanger structure and vehicle front structure, there is a problem in that hot air which has passed through the heat exchanger is blocked by an engine when the heat exchanger and the engine are arranged near to each other in a case where the heat exchanger is disposed at a position as rear as possible under the recent tendency toward downsizing of an engine room according to enlargement in a passenger compartment.

The present invention is made to solve the above-described problem, and its object is to provide a heat exchanger supporting structure and a vehicle front structure that can improve the air permeability in an engine room and prevent a heat exchanger from being damaged when external force acts thereon from a vehicle front side.

### [MEANS FOR SOLVING THE PROBLEMS]

In a heat exchanger supporting structure of the first present invention, a heat exchanger is supported on a vehicle body at a vehicle front side. The heat exchanger is capable of moving a predetermined distance toward a vehicle rear side, maintaining a support state relative to a vehicle body, when external force acts on the heat exchanger from the vehicle front side.

In addition, in a vehicle front structure of the second present invention, a bumper armature is arranged at a vehicle front side, a heat exchanger is arranged at a vehicle rear side of the bumper armature, a press member is installed between the bumper armature and the heat exchanger; and a fixation portion fixes the heat exchanger on a vehicle body. The heat exchanger is provided with a supporting portion that is supported to be capable of moving a predetermined distance toward the vehicle rear side, maintaining a support state thereof, when the heat exchanger is disengaged from the fixation portion.

### [EFFECT OF THE INVENTION]

In the heat exchanger supporting structure of the present invention, the heat exchanger is supported on the vehicle body at the vehicle front side. The heat exchanger is capable of moving the predetermined distance toward the vehicle rear side, maintaining the support state relative to the vehicle body, when the external force acts on the heat exchanger from the vehicle front side. Therefore, the air permeability can be maintained to be good, and the heat exchanger can be prevented from being damaged when the external force acts from the vehicle front side.

In the vehicle front structure of the present invention, the bumper armature is arranged at the vehicle front side, the heat exchanger is arranged at the vehicle rear side of the bumper armature, the press member is installed between the bumper armature and the heat exchanger; and the fixation portion fixes the heat exchanger on the vehicle body. The heat exchanger is provided with the supporting portion that is supported to be capable of moving the predetermined distance toward the vehicle rear side, maintaining the support state thereof, when the heat exchanger is disengaged from the fixation portion. Therefore, the air permeability can be maintained to be good, and the heat exchanger can be prevented from being damaged when the external force acts from the vehicle front side.

### [BRIEF DESCRIPTION OF THE DRAWINGS]

FIG. 1 is an exploded perspective view showing a radiator core support and a heat exchanger of a first embodiment according to the present invention;
FIG 2 is a perspective view showing the radiator core support and the heat exchanger of the first embodiment according to the present invention;
FIG. 3 is a perspective view showing a bracket of a radiator core upper support member of the first embodiment;
FIG 4 is a bracket of a radiator core lower support member of the first embodiment;
FIG. 5 is view illustrating how to fix the heat exchanger on the radiator core support according to the first embodiment;
FIG. 6 is a partially omitted view showing the heat exchanger supporting structure and the vehicle front structure of the first embodiment;
FIG. 7 is a view illustrating the operation of the first embodiment;
FIG 8 is a view illustrating the operation of the first embodiment;
FIG. 9 is a view showing a heat exchanger supporting structure and a vehicle front structure of a second embodiment according to the present invention;
FIG. 10 is an exploded perspective view showing a heat exchanger supporting structure and a vehicle front structure of a third embodiment according to the present invention;
FIG. 11 is a perspective view showing the heat exchanger supporting structure and the vehicle front structure of the third embodiment according to the present invention;
FIG 12 is a view taken along a line S12 - S12 in FIG. 11, where (a) is a view of a cross section and (b) is a view illustrating the operation;
FIG 13 is an exploded perspective view showing a heat exchanger supporting structure and a vehicle front structure of a fourth embodiment according to the present invention;
FIG. 14 is a perspective view showing the heat exchanger supporting structure and the vehicle front structure of the fourth embodiment according to the present invention;
FIG. 15 is a view taken along a line S15 - S15 in FIG. 14, where (a) is a view of a cross section and (b) is a view illustrating the operation;
FIG. 16 is an exploded view showing a heat exchanger supporting structure and a vehicle front structure of a fifth embodiment according to the present invention;
FIG. 17 is perspective view showing the heat exchanger supporting structure and the vehicle front structure of the fifth embodiment according to the present invention;
FIG. 18 is a view taken along a line S18 - S 18, where (a) is a view of a cross section and (b) is a view illustrating the operation;
FIG. 19 is an exploded perspective view showing a heat exchanger supporting structure and a vehicle front structure of a sixth embodiment according to the present invention;
FIG. 20 is a perspective view showing the heat exchanger supporting structure and the vehicle front structure of the sixth embodiment according to the present invention; and
FIG. 21 is a perspective view showing a heat exchanger supporting structure and a vehicle front structure of the other embodiment according to the present invention.

### [DESCRIPTION OF REFERENCE NUMBERS]

P1, P2 vehicle mounting pin
B1 bolt
R opening portion
1 radiator
1a radiator core upper support
1b radiator core lower support
1c, 1d radiator core side support
1e upper center portion
1f, 1g upper side portion
1h, 1i side member attachment portion
2 radiator (heat exchanger)
2a, 2b tank
2c core
2d, 2e inlet/outlet port
2f, 2g tube plate
2h tube
2i fin
2j, 2k reinforcement member
2m fan
2n motor fan shroud
3, 4 bracket
3a, 4a slide hole
3b, 4e stopper portion
4b through-hole
4c rotary shaft
4d seat portion
5 fan
6 motor fan shroud
7 mounting member
9 bumper stay
10 side member
11 bumper armature
12 pressing member
13 engine
20 air guide (pressing member)
20a opening portion
30 pedestal plate
30a, 30b, 30c engagement portion (of the pedestal plate)
30d through-hole
31 movable member
31a support hole
31b, 31c engaging portion(of the movable member)
31 d front end portion
31e rear end portion
32 engagement pin
32a vulnerable portion
40 nail portion
41 top portion
42 opening portion
50 projecting portion
51 opening portion
52 through hole
60 movable member
60a support hole
60b, 60c engaging portion (of the movable member)
60d through hole (of the movable member)
60e front end portion
61a, 61 b, 61c engaging portion (of the radiator core side support or its peripheral portion)
61 d through hole (of the radiator core side support or its peripheral portion).
62 lock pin
62a vulnerable portion

### [BEST MODE FOR CARRYING OUT THE INVENTION]

Hereinafter, embodiments according to the present invention will be described with the accompanying drawings.

### [FIRST EMBODIMENT]

Hereinafter, a first embodiment will be described.
In the first embodiment, a case where a heat exchanger employs a radiator will be explained.
Incidentally, "a front and back direction of a motor vehicle" and "a wide direction of the motor vehicle" are indicated as "a front and back direction" and "a left and right direction", respectively.

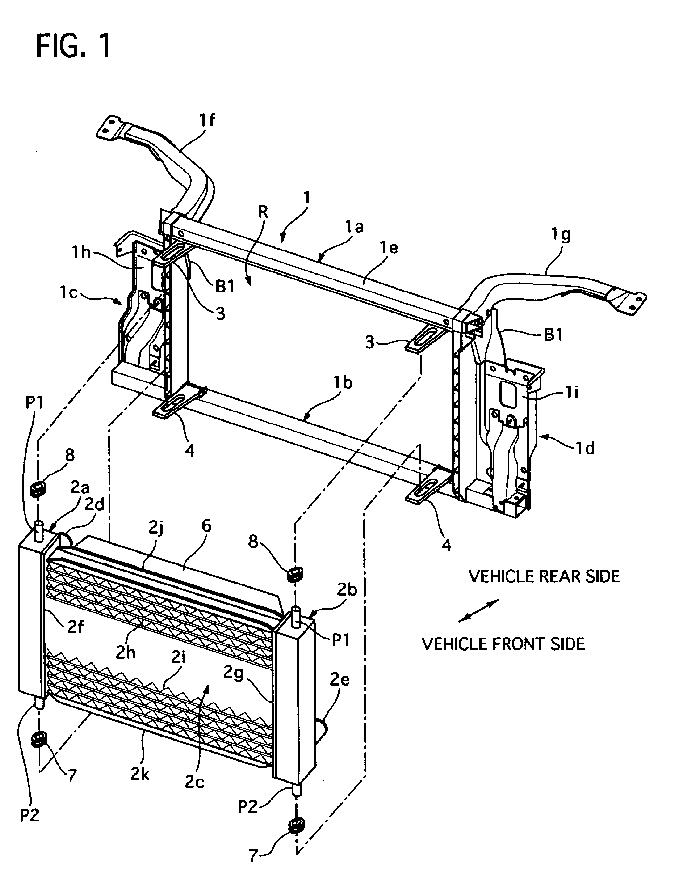

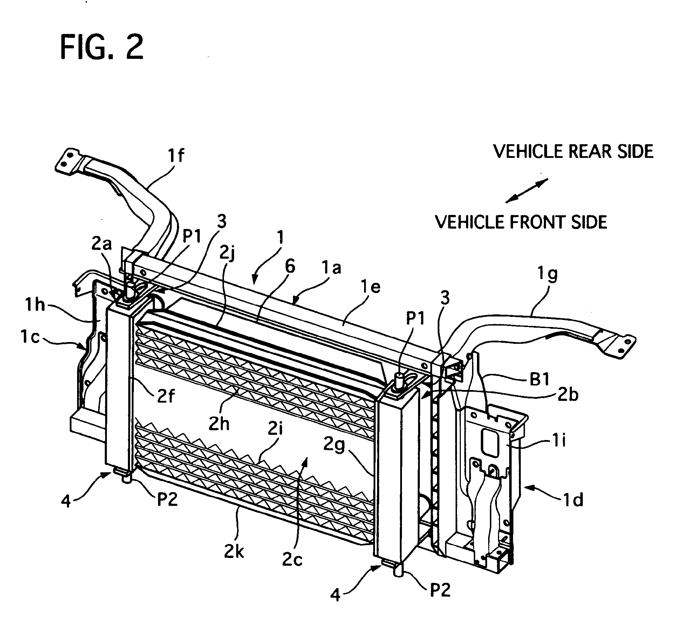

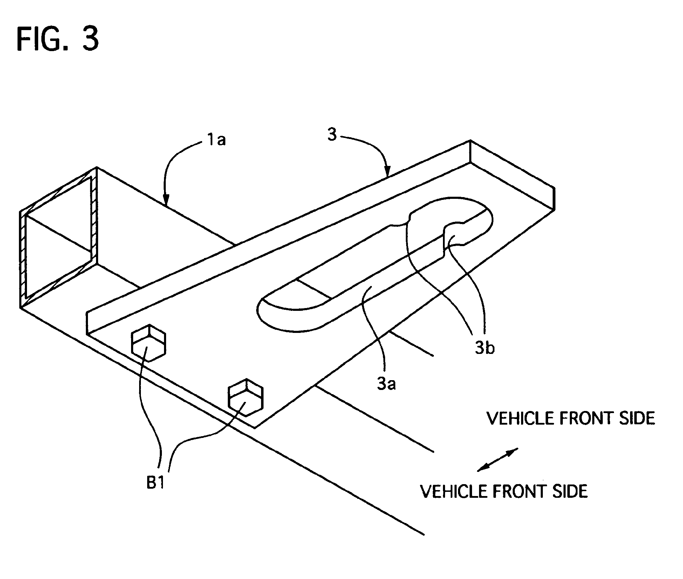

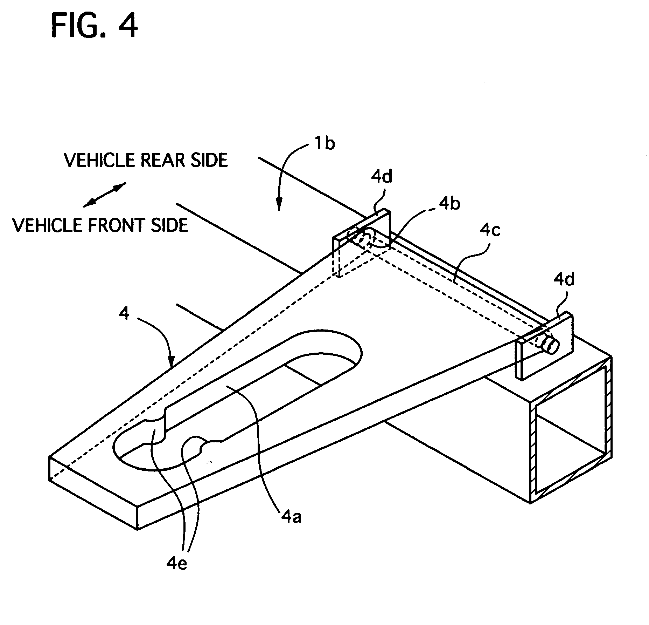

FIG 1 is an exploded perspective view of a radiator core support and a heat exchanger of the first embodiment, FIG. 2 is a perspective view of the same, FIG 3 is a perspective view of a bracket of a radiator core upper support of the first embodiment, and FIG. 4 is a perspective view of a bracket of a radiator core lower support.

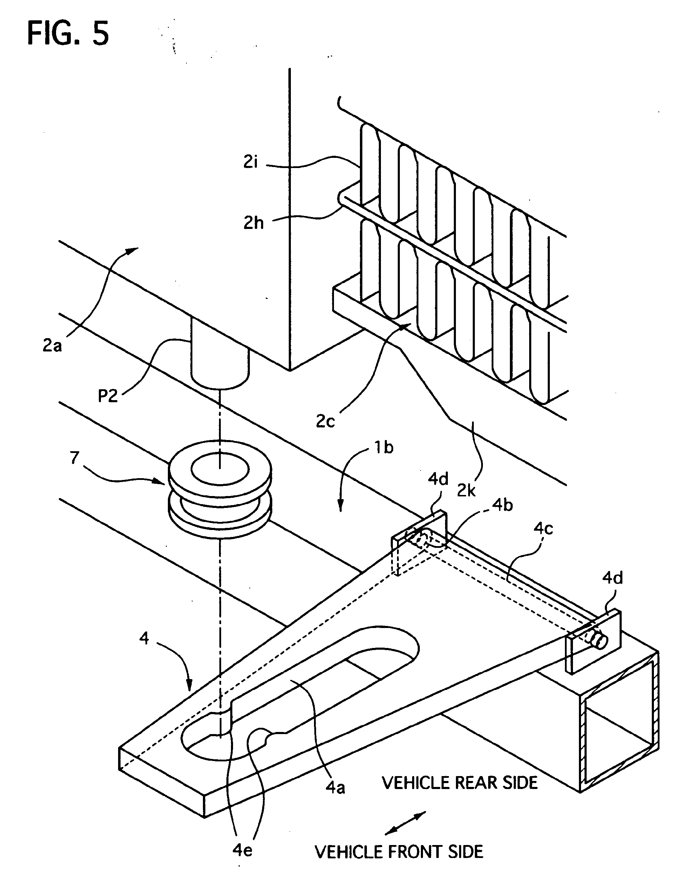

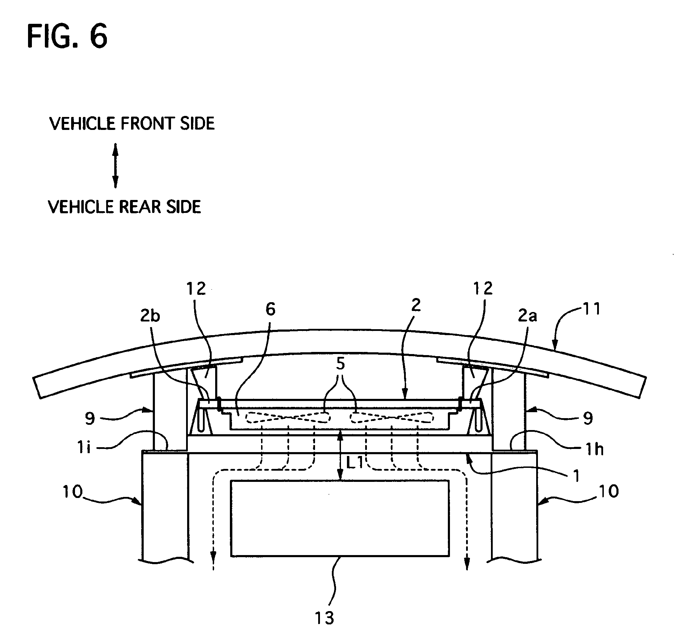

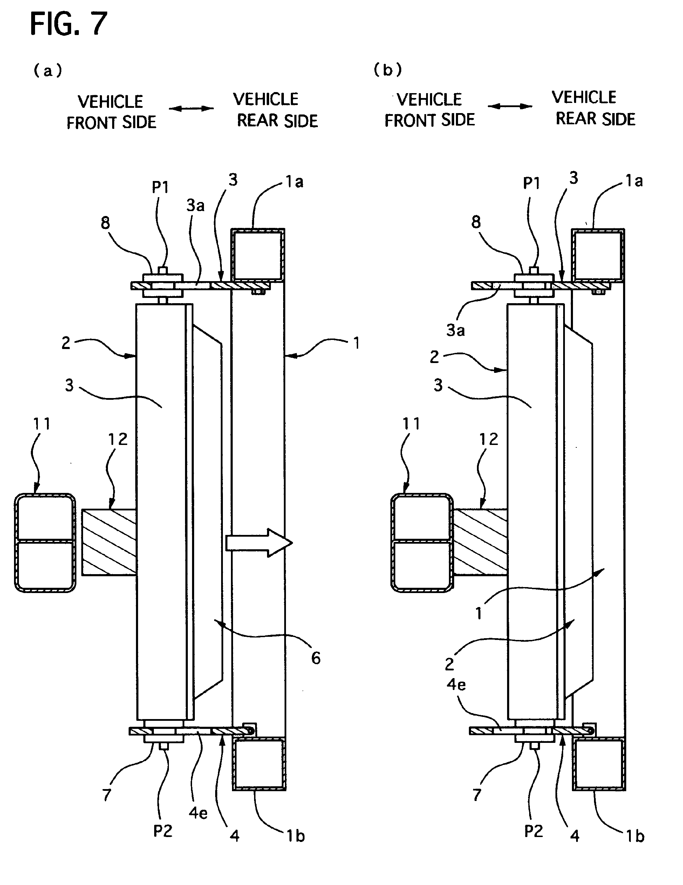

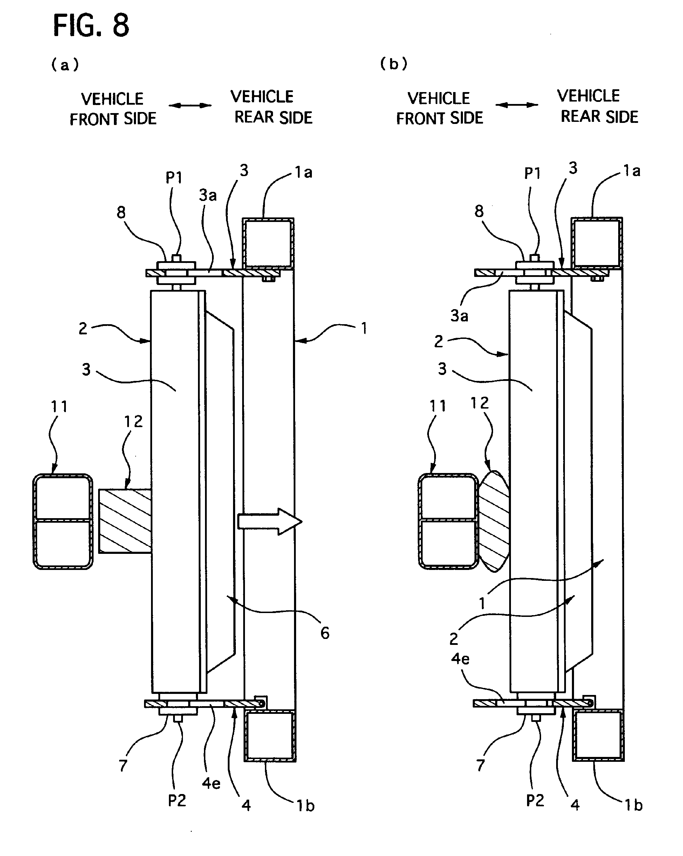

FIG. 5 is a view illustrating how to fix the heat exchanger on the radiator core support, FIG. 6 is a partially omitted view of a heat exchanger supporting structure and a vehicle front structure of the first embodiment, and FIGS. 7 and 8 are views illustrating the operation of the first embodiment.

First, an entire construction of the first embodiment will be described.
As shown in FIGS. 1 and 2, the first embodiment has a radiator core support 1 and a radiator 2, where the radiator core support 1 corresponds to a vehicle body of the present invention, and the radiator 2 corresponds to a heat exchanger of the present invention.

The radiator core support 1 includes a radiator core upper support 1a that extends in a left and right direction, a radiator core lower support 1b that is arranged parallel to the radiator core upper support 1a, radiator core side supports 1c and 1d that connect left and right end portions of the radiator core upper support 1a and the radiator core lower support 1b.

The radiator core upper support 1a is made of metal material, and it is composed of a metal upper center portion 1e and upper side portions 1f and 1g, where the upper center portion 1e has a cross section formed like a rectangle shape, namely like a substantial square pipe, and it extends in the left and right direction, and the upper side portions 1f and 1g are connected with the left and right end portions of the upper center portion 1e, and it has a cross section formed like a substantial U-letter shape to open rearward.

In addition, upper side portions 2a and 2b are connected, at base sides thereof, with upper portions of corresponding metal side member attachment portions 1h and 1i through brackets B1, respectively.

The radiator core lower support 1b is made of metal material to have a cross section formed like a rectangular shape, namely a substantial square pipe, and it extends in the left and right direction. Left and right end portions of the radiator core lower support 1b are connected with lower portions of corresponding side member attachment portions 1h and 1i.

The radiator core side supports 1c and 1d are made of resin material, and they have a cross section formed like a substantial U-letter shape to open rearward, and upper and lower both end portions thereof are connected with left and right both end portions of the radiator core upper support 1a and left and right both end portions of the radiator core lower support 1b, in a plastically molded state.

In addition, inside of the radiator core upper support 1a, the radiator core lower support 1b, and the radiator core side supports 1c and 1d, an opening portion R is formed to introduce air flow to a radiator 2, which will be later described.

Further, in the first embodiment, brackets 3 are provided on left and right both end portions of the radiator core upper support 1a on a lower surface thereof, respectively, while brackets 4 are provided on left and right end portions of the radiator core lower support 1b on an upper surface thereof, respectively.

As shown in FIG 3, the brackets 3 are made of metal material, being formed like a plate, where top portions thereof are provided with a long slide hole 3a that extends in a front and back direction in a state where it opens in an up and down (vertical) direction, and base portions are detachably fixed on the lower surface of the radiator core upper support 1a by using a pair of left and right bolts B 1.
In addition, at a vehicle front side of the slide hole 3a, a pair of stopper portions 3b that projects inside of the slide hole 3a. The stopper portions 3b correspond to a fixation releasing portion of the present invention.

As shown in FIG. 4, the brackets 4 are made of metal material, being formed like a plate, and top portions thereof are provided with a long slide hole 4a that extends in the front and back direction in a state where it opens in the up and down direction. Base side portions thereof are formed with a through hole 4b that penetrates in the left and right direction, and they are provided with a rotary shaft 4c whose diameter is slightly smaller than that of the through hole 4b in a state where it penetrates therethrough.
Further, both end portions of the rotary shaft 4c are fixed, by not-shown welding, to a pair of left and right seat portions 4d which is formed like a plate and is provided on the upper surface of the radiator core lower support 1b. Accordingly, the brackets 3 can be rotated in a vertical plane, being stored in compact.
Further, at the front side of the slide hole 4a, a pair of stopper portions 4e are provided to project inside the slide hole 4a. The stopper portions 4e correspond to the fixation releasing portion of the present invention.

As shown in FIG. 1, the radiator 2 includes a pair of tanks 2a and 2b, and a core part 2c that is arranged between the tanks 2a and 2b.
Each of the tank 2a, 2b is integrally formed of resin material. The tanks 2a and 2b are provided, on left and right upper top portions thereof, with a vehicle mount pin P1 that is made of resin material and formed like a circular cylinder to project upward, while the each thereof is provided, on left and right lower end portions thereof, with a vehicle mount pin P2 that is made of the resin material and formed like the circular cylinder to project downward. In addition, the tank 2a is provided with an inlet/outlet port 2d that is formed like a circular cylinder and projects rearward in a communication state with an interior thereof, while the tank 2b is provided with an inlet/outlet port 2e that is formed like a circular cylinder and projects rearward in a communication state with an interior thereof.

The core part 2c includes a pair of tube plates 2f and 2g, a plurality of tubes 2h, and a plurality of corrugated fins 2i, where the tube plates 2f and 2g are connected with the tanks 2a and 2b, both end portions of the tubes 2h are inserted into and fixed to corresponding tube plates 2f and 2g, and the corrugated fins 2i are arranged between the adjacent tubes 2h.
In addition, both end portions of the tube plates 2f and 2g are reinforced by a pair of reinforcement members 2j and 2k.
Further, all construction parts of the core part 2c of the first embodiment are made of aluminum material, and one side portions/parts of joining ones of the construction parts are provided with a clad layer, namely a brazing sheet, and the joining ones are brazed to be fixed with each other as one unit by using heat treatment in a heat furnace in a state where the construction parts are temporally assembled.

Further, as shown in FIG. 6, on a rear surface of the core part 2c of the radiator 2, a motor fan shroud, which is made of resin material, is attached, and contains a pair of fans 5.

In order to mount the thus-constructed radiator 2 on a front side of the radiator core support 1, as shown in FIG. 1 and FIG. 5, mounting members 7 are placed at vehicle front side prescribed positions of the slide holes 4a of the brackets 4 at left and right end portions of the radiator core lower support 1b. The mounting members 7 are made of elastic material such as rubber, and they are shaped like a circular cylinder. The mounting members 7 correspond to an elastic member of the present invention. Then, the vehicle mounting pins P2 of the radiator 2 are inserted into center holes of the mounting members 7, respectively, so that the radiator 2 is fixed on the radiator core support 1 in a support state. In this case, the vehicle mounting pins P2 are slightly engaged with corresponding stopper portions 4e of the slide holes 4a so that they are restricted to move rearward.

Next, mounting members 8 are placed at vehicle front side prescribed positions of the slide holes 3a of the brackets 3. The mounting members 8 are made of the elastic material such as the rubber, and they are shaped like a circular cylinder. The mounting members 8 correspond to the elastic member of the present invention. Then the vehicle mounting pins P1 of the radiator 2 are inserted into center holes of the mounting members 8, respectively, so that the brackets 3 are fixed on the rear surface of the radiator core support 1 by using bolts B 1.
In this case, the vehicle mounting pins P1 are slightly engaged with corresponding stopper portions 3b of the slide holes 3a so that they are restricted to move rearward.

Accordingly, as shown in FIG. 2, the radiator 2 is installed at the front side of the radiator core upper support 1a through the mounting members 7 and 8.

Next, the operation of the first embodiment will de described.
As shown in FIG. 6, the thus-constructed radiator core support 1 is installed in an engine room of the motor vehicle, in a state where rear end portions of bumper stays 9 are connected with corresponding front portions of the side member attachment portions 1h and 1j of the radiator core support 1 and front end portions of the side members 10 are connected with corresponding rear portions thereof.
In addition, front end portions of the bumper stays 9 and 9 are fixed with a bumper armature 11 that has a rectangular cross section and extends in the left and right direction.

Further, in the first embodiment, a pair of press members 12 is made of resin foam material such as polypropylene, and they are installed between the tanks 2a and 2b of the radiator 2 and the bumper armature 11.
The press members 12 are stuck on the corresponding tanks 2a and 2b of the radiator 2 so that slight gaps are formed between the press members 12 and the bumper armature 11.

Since the radiator 2 is arranged in front of the radiator core support 1, a sufficient length L1 can be ensured between the radiator 2 and the engine 13, so that air flow that has passed through the radiator 2 or forced air flow, as indicated by dashed line arrow, that is generated by the fan 5 can smoothly flow toward a rear side of the engine 13. Therefore, the air permeability in the engine room can be maintained to be good.

As shown in FIG. 7(a) and (b), in a case where the motor vehicle collides at low speed (corresponding to a case where external force of the present invention acts), the bumper armature 11 moves rearward, and it pushes the radiator 2 rearward through the press members 12. As a result, the vehicle mounting pins P1 and P2 of the radiator 2 are disengaged from the stopper portions 3a and 4e of the slide holes 3a and 4a, and they slide rearward, so that the radiator 2 also moves rearward.

Therefore, the radiator 2 can be prevented from being damaged due to contact between the bumper armature 11 and the radiator 2 in a light collision case of the motor vehicle.
In addition, there is no danger of damage of the radiator core support 1 due to the movement of the radiator 2, because the radiator 2 moves, sliding the vehicle mounting pins P1 and P2 along the corresponding slide holes 3a and 4a.

On the other hand, in a case where the motor vehicle collides at high speed (corresponding to a case where the external force of the present invention acts), the radiator 2 moves rearward similarly to the above-described case, as shown in FIG. 8. In this operation, the press members 12 are crashed to disperse and absorb impact force, finally being broken to collapse. Therefore, the press members 12 can be restricted to function as a rigid body.

Further, since the left and right end portions of the radiator 2 are fixed to the brackets 4 (3) through the mounting member 7 (8) in the first embodiment, the radiator 2 can be smoothly moved rearward, absorbing a little impact force, in a case where the impact force acts from one direction of the left and right directions of the radiator 2.

Further, since the radiator 2 is fixed in a state where it is restricted to move toward the vehicle front side, the radiator 2 can be prevented from being swung in the front and rear direction.

Next, the effects of the first embodiment will be described.
As explained above, in the heat exchanger supporting structure and the vehicle front structure of the first embodiment, the supporting structure of the heat exchanger, namely the radiator 2, on the vehicle body at the vehicle front side is constructed so that the heat exchanger (radiator 2) is capable of moving rearward for the predetermined distance, the support state thereof being maintained relative to the vehicle body, in the case where the external force acts on the heat exchanger (the radiator 2) from the vehicle front side. Therefore, the air permeability in the engine room can be maintained to be good, and the heat exchanger (the radiator 2) can be prevented from being damaged when the external force acts from the vehicle front side.

In addition, since the press members 12 are made of the resin foam, they can function as an impact absorbing member in the vehicle collision, avoiding functioning as a rigid body.

### [SECOND EMBODIMENT]

Hereinafter, a second embodiment will be described.
In the second embodiment, parts/portions similar to those of the first embodiment are indicated by the same reference numbers, and their explanations are omitted. Only parts/portions different from the first embodiment will be described in detail.

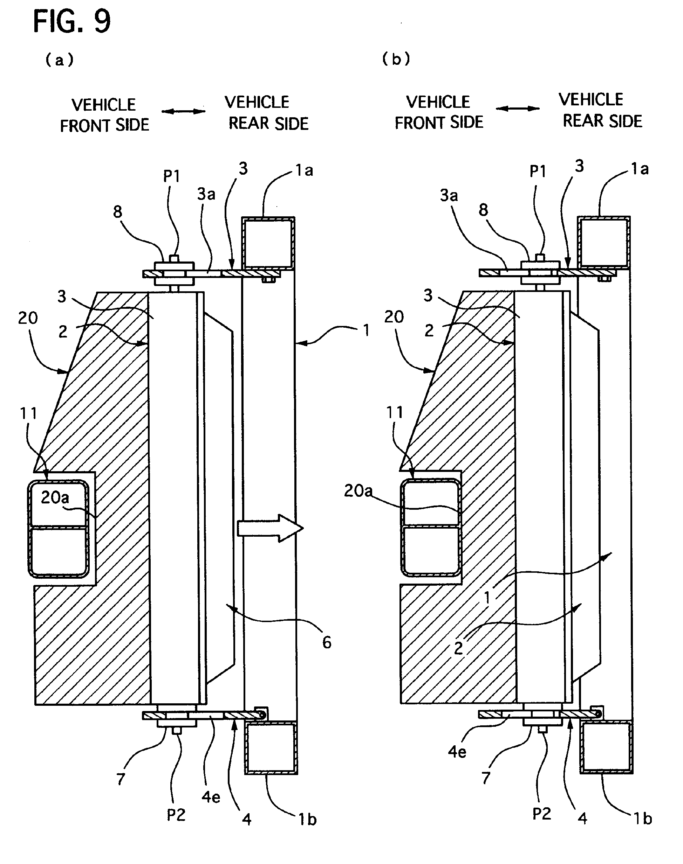

FIG. 9 is a view illustrating a heat exchanger supporting structure and a vehicle front structure of a second embodiment according to the present invention and illustrating the operation thereof.

As shown in FIG. 9(a), in the second embodiment, air guides 20 are fixed at left and right sides of a radiator 2 in a state where they project forward, where the air guides 20 are made of resin material such as polypropylene and they are formed like a plate. Slight gaps are formed between the bumper armature 11 and opening portions 20a of the air guides 20 that open forward. These are constructions different from the first embodiment. Incidentally, the fixation of the air guides 20 and the radiator 2 may employ appropriate fixing structures similarly to conventional fixing structures of the air guides and the radiator core support, for example, using fastening members such as clips and partial engagement of the air guide 20 and the radiator 2.

Therefore, the air guides 20 function as one that guides air flow that is generated when the motor vehicle is running, and also one that prevents hot air at an engine side from being blown back toward the vehicle front side when the motor vehicle stops. As shown in FIG. 9(a) and (b), the bumper armature 11 moves rearward when the motor vehicle collides at low speed, pushing the radiator 2 rearward through the air guides 20. As a result, the vehicle mounting pins P1 and P2 of the radiator 2 are disengaged from the stopper portions 3a and 4e of the corresponding slide holes 3a and 4e, and they slide rearward, so that the radiator 2 moves rearward.

Therefore, the air guides 20 can be also used as a press member in the light collision case of the motor vehicle, and the radiator 2 can be prevented from being damaged due to the contact between the bumper armature 11 and the radiator 2.

### [THIRD EMBODIMENT]

Hereinafter, a third embodiment will be described.
In the third embodiment, parts/portions similar to those of the first embodiment are indicated by the same reference numbers, and their explanations are omitted. Only parts/portions different from the first embodiment will be described in detail.

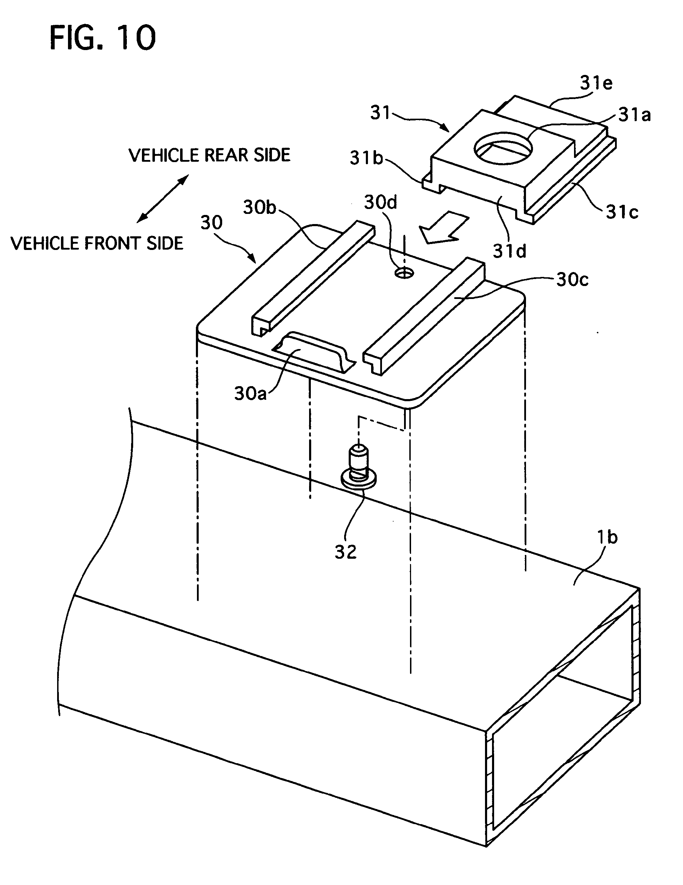

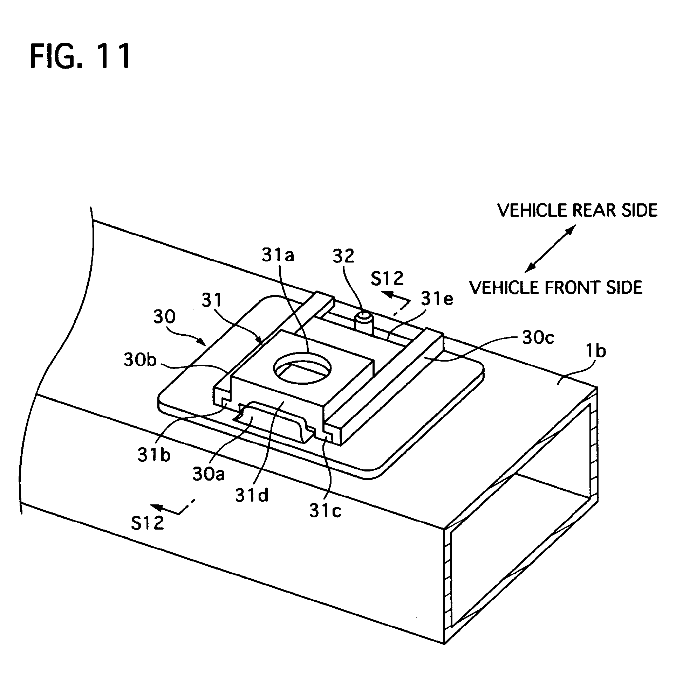

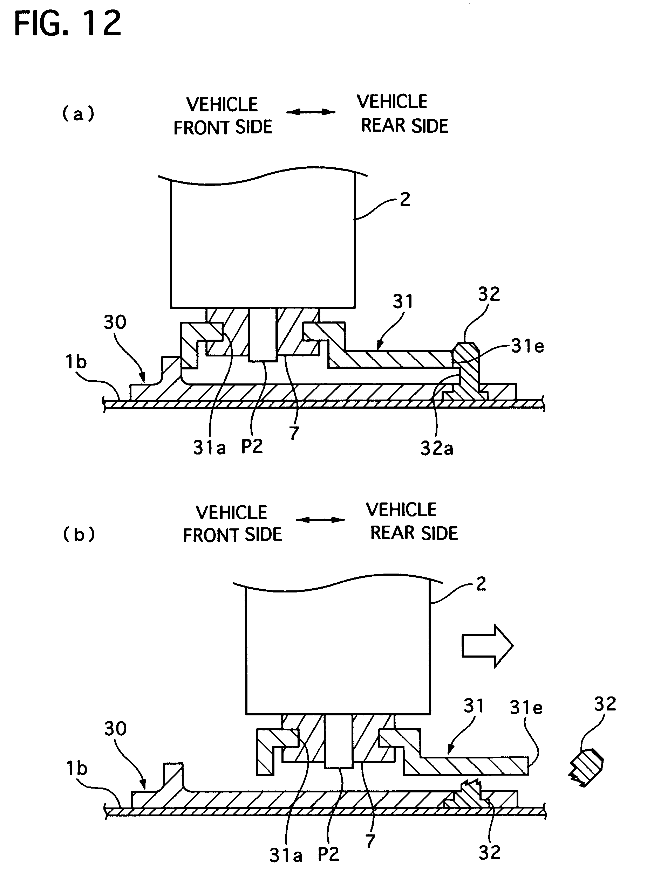

FIG 10 is an exploded perspective view illustrating a heat exchanger supporting structure and a vehicle front structure of the third embodiment according to the present invention, FIG. 11 is a perspective view of the same, FIG. 12(a) is a cross sectional view taken along a line S12 - S12 in FIG. 11, and FIG. 12(b) is a view illustrating the operation thereof.

Incidentally, in the third embodiment, a fixing structure of upper and lower end portions of a radiator are similar to each other, and accordingly only the lower end portion at one side of the radiator is illustrated and is explained.

As shown in FIG. 10, the third embodiment includes a pedestal plate 30 and a movable member 31, where the pedestal plate 30 is fixed on a radiator core lower support 1b, and the movable member 31 is fixed on the pedestal plate 30.

On the pedestal plate 30, there formed with an engagement portion 30a that extends in a left and right direction in a state where it projects upward and engagement portions 30b and 30c that extends in a front and back direction in a state where they project upward, being formed like a substantial L-letter shape, and a through hole 30d being formed at a rear position opposite to the engagement portion 30a to open in a vertical direction.
On the other hand, the movable member 31 is formed with a support hole 31a that opens in the vertical direction, and engagement portions 31b and 31c are formed at both sides of end portion thereof to extend in the front and back direction in a state where they project in the left and right direction, where they are capable of respectively engaging with the engagement portions 30b and 30c of the pedestal plate 30 from these rear sides.

Therefore, as shown in FIG. 10 and FIG. 11, the engagement portions 31b and 31c are engaged with the engagement portions 30b and 30c of the pedestal plate 30 from these rear sides so that a front end portion 31d of the movable member 31 contacts with the engagement portion 30a. In addition, an engagement pin 32, corresponding to a fixation releasing portion of the present invention, is inserted in the through hole 30d of the pedestal plate 30 from a downside thereof so that it contacts with a rear end portion 31e of the movable member 31. In this contact state, these three parts are fixed with each other by fixing the pedestal plate 30 on the radiator core lower support 1b by using not-shown welding. As a result, the movable member 31 is fixed on the pedestal plate 30 in a state where it is restricted to move in the front and back direction and in the left and right direction.

As shown in FIG. 12(a), the radiator 2 is fixed to and supported on the movable members 31 in a state where the vehicle mounting pins P2 of the radiator 2 are inserted in the support holes 31a of the movable members 31 through the mounting members 7.

In addition, as shown in FIG. 12(b), when the motor vehicle collides, the radiator 2 moves rearward similarly to the previous embodiments, the rear end portions 31e of the movable members 31 push the engagement pin 32 to divide thin vulnerable portions 32a thereof into parts, thereby releasing the fixing state of the movable members 31. Then, after the movable members 31 slide and move rearward, maintaining the support state of the lower portions of the radiator 2, they are disengaged from each other. Therefore, the radiator 2 can be prevented from being damaged.

### [FOURTH EMBODIMENT]

Hereinafter, a fourth embodiment will be described.
In the fourth embodiment, parts/portions similar to those of the first embodiment are indicated by the same reference numbers, and their explanations are omitted. Only parts/portions different from the first embodiment will be described in detail.

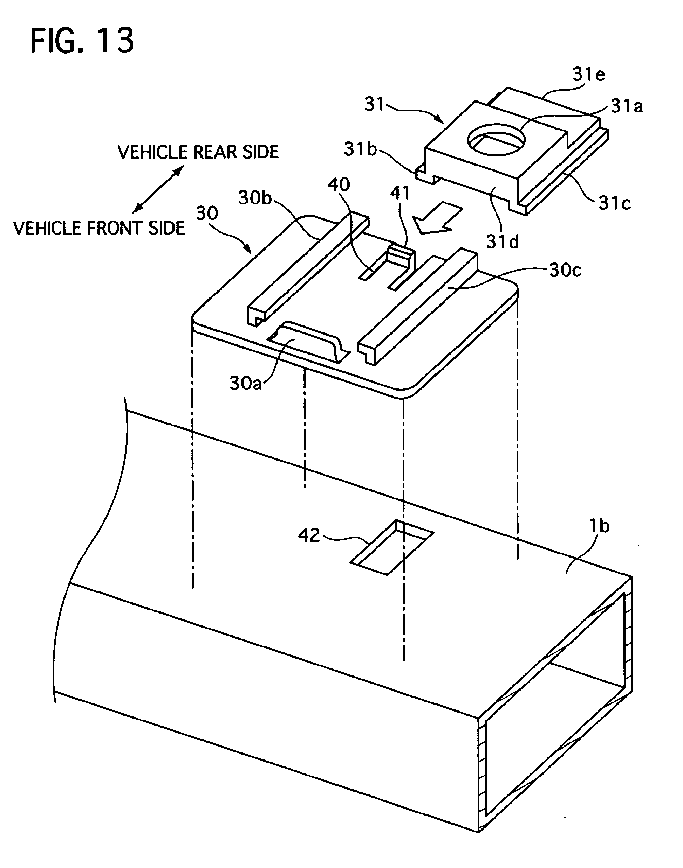

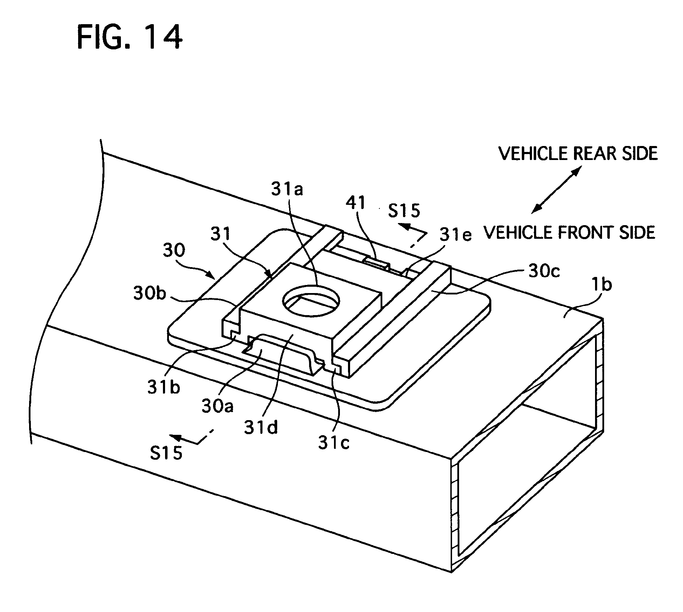

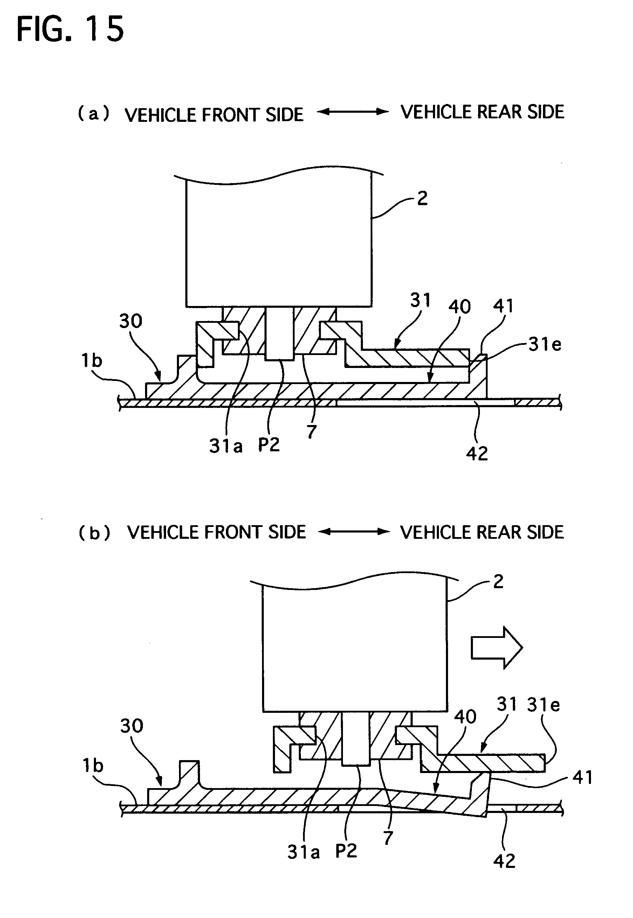

FIG. 13 is an exploded perspective view illustrating a heat exchanger supporting structure and a vehicle front structure of the fourth embodiment according to the present invention, FIG. 14 is a perspective view of the same, FIG. 15(a) is a cross sectional view taken along a line S15 - S15 in FIG. 14, and FIG. 15(b) is a view illustrating the operation thereof.

Incidentally, in the fourth embodiment, a fixing structure of upper and lower end portions of a radiator are similar to each other, and accordingly only the lower end portion at one side of the radiator is illustrated and is explained.

As shown in FIG. 13 and FIG. 14, in a heat exchanger supporting structure and a vehicle front structure of the fourth embodiment, a nail portion 40, corresponding to the fixation releasing portion of the present invention, is integrally formed on a rear end portion of a pedestal plate 30, instead of the through hole 30a in the third embodiment, so that a movable member 31 is restricted to move rearward because of engagement between a top portion 41 of the nail portion 40 and a rear end portion 31e of the movable member 31.

In addition, an opening portion 42 is formed in a radiator core lower support 1b so as to allow the nail portion 40 to elastically deform toward a downside.

As shown in FIG. 15(a), the radiator 2 is fixed and supported on the movable members 31 in a state where vehicle mounting pins P2 of the radiator 2 are inserted in support holes 31a of the movable members 31.

In addition, as shown in FIG. 15(b), the radiator 2 moves rearward in a vehicle collision case similarly to the embodiments, the fixation state of the movable members 31 is released because the rear end portions 31e of the movable members 31 push the top portions 41 of the nail portions 40 rearward to elastically deform the nail portions 40 into the opening portions 42. Then after the movable members 31 slide and move rearward, maintaining the support state of the lower portion of the radiator 2, they are disengaged from each other. Therefore, the radiator 2 can be prevented from being damaged.

### [FIFTH EMBODIMENT]

Hereinafter, a fifth embodiment will be described.
In the fifth embodiment, parts/portions similar to those of the first embodiment are indicated by the same reference numbers, and their explanations are omitted. Only parts/portions different from the first embodiment will be described in detail.

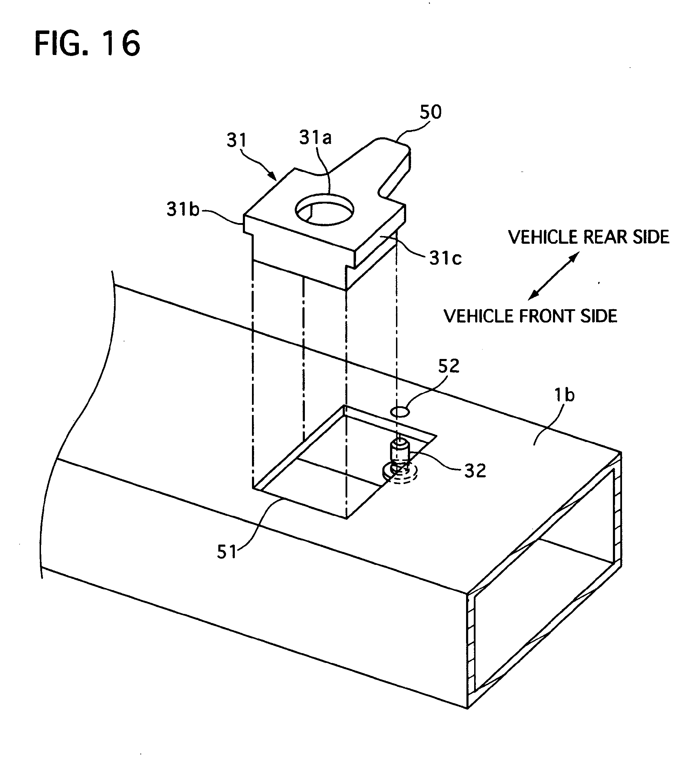

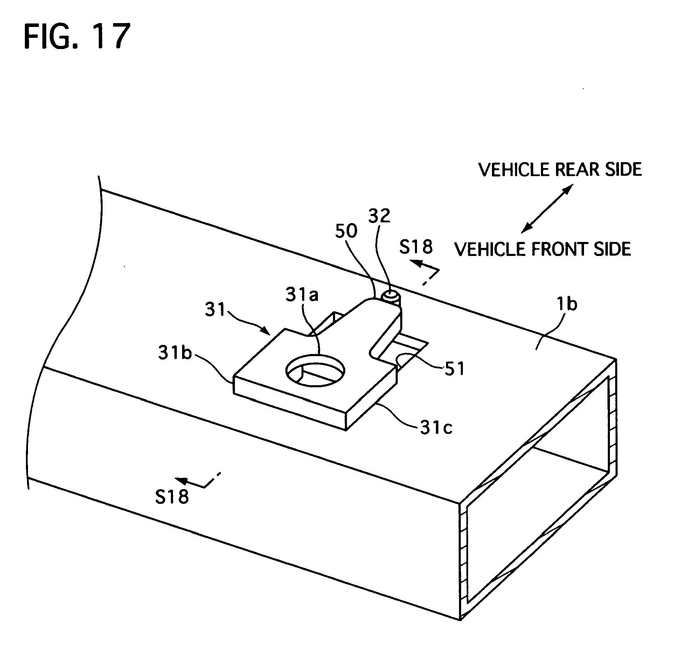

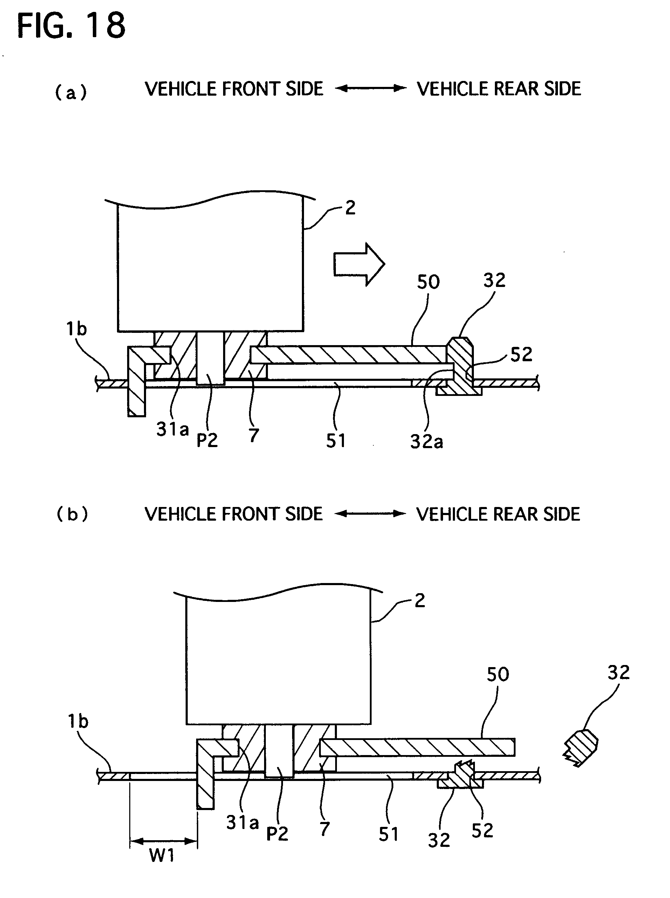

FIG. 16 is an exploded perspective view illustrating a heat exchanger supporting structure and a vehicle front structure of the fifth embodiment according to the present invention, FIG. 17 is a perspective view of the same, FIG. 18(a) is a cross sectional view taken along a line S18 - S18 in FIG. 17, and FIG. 17(b) is a view illustrating the operation thereof.

Incidentally, in the fifth embodiment, a fixing structure of upper and lower end portions of a radiator are similar to each other, and accordingly only the lower end portion at one side of the radiator is illustrated and is explained.

As shown in FIG. 16, in the heat exchanger supporting structure and the vehicle front structure of the fifth embodiment, the pedestal plate 30 in the fourth embodiment is removed, engagement portions 30b and 30c of a movable member 31 are formed on an upper portion at both sides thereof, and a projecting portion 50 is formed to project rearward from a rear end portion of the movable plate 31.

On the other hand, an opening portion 51 is formed in a radiator core lower support 1b to be shaped like a rectangle long in a front and back direction, and a through hole 52 is formed at a rear portion near the opening portion 51 to open in a vertical direction.

Accordingly, as shown in FIG. 16 and FIG. 17, engagement portions 31b and 31 c of the movable member 31 are engaged with a front portion of the opening portion 51 of the radiator core lower support 1b, and an engagement pin 32, corresponding to the fixation releasing portion of the present invention, is inserted in the through hole 52 of the radiator core lower support 1b from a downside and fixed thereto so as to contact with the projecting portion 50. As a result, the movable member 31 can be fixed on the radiator core lower support 1b, in a state where it is restricted to move in the front and back direction and in the left and right direction.

In addition, as shown in FIG. 18(a), the radiator is fixed to and supported on the movable members 31 in a state where vehicle mounting pins P2 of the radiator 2 are inserted in the support holes 31a of the movable members 31.

Further, as shown in FIG. 18(b), the radiator 2 moves rearward similarly to the embodiments in a collision case of a motor vehicle, so that rear end portions of the movable members 31 push the engagement pins 32 in a rear direction to break their thin vulnerable portions 32a into parts. As a result, the fixation state of the movable members 31 is released, and then the movable members 31 slide and move a predetermined distance W1 rearward, maintaining a support state of a lower portion of the radiator 2. Therefore, the radiator 2 can be prevented from being damaged.

Incidentally, a structure having the nail portion 40, which has been explained in the fourth embodiment, may be employed instead of the engagement pin 32.

### [SIXTH EMBODIMENT]

Hereinafter, a sixth embodiment will be described.
In the sixth embodiment, parts/portions similar to those of the first embodiment are indicated by the same reference numbers, and their explanations are omitted. Only parts/portions different from the first embodiment will be described in detail.

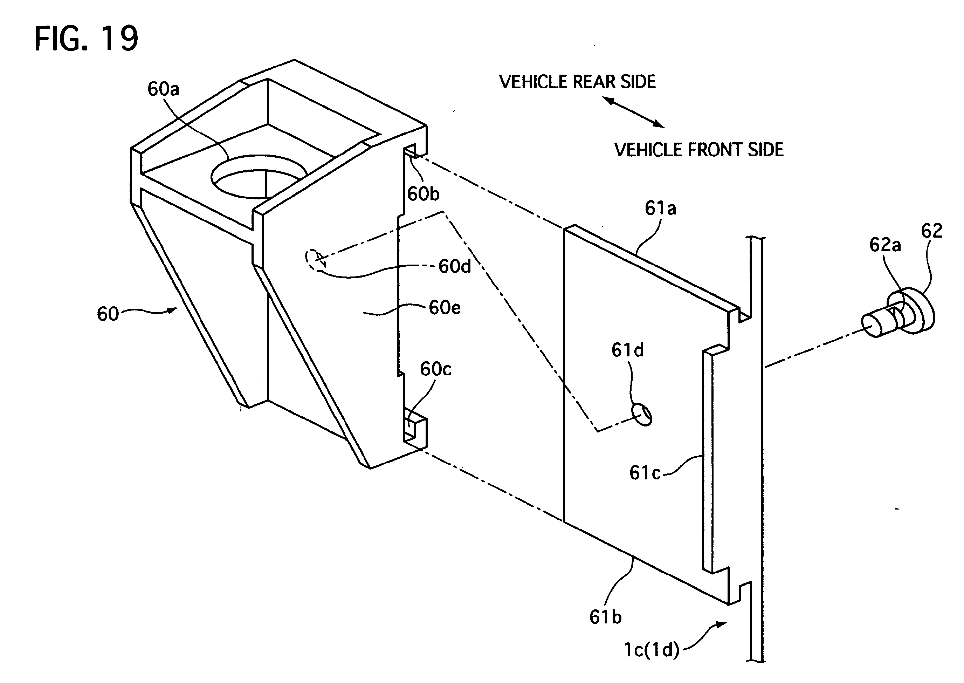

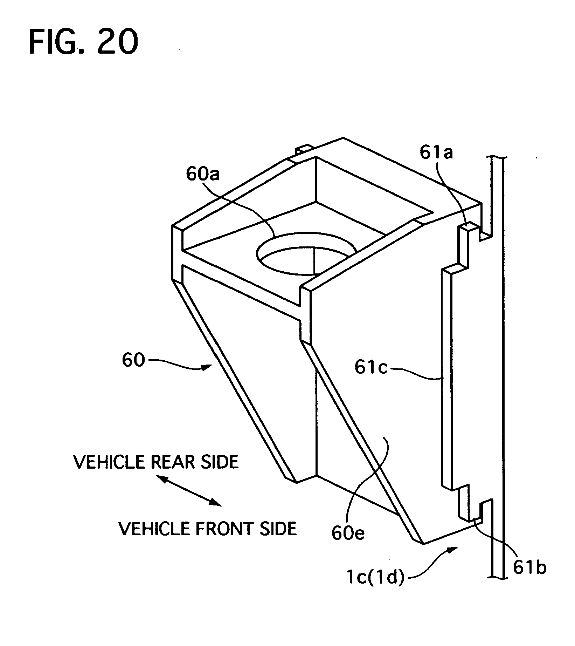

FIG. 19 is an exploded perspective view illustrating a heat exchanger supporting structure and a vehicle front structure of the sixth embodiment according to the present invention, and FIG. 20 is a perspective view of the same.

Incidentally, in the sixth embodiment, a fixing structure of upper and lower end portions of a radiator are similar to each other, and accordingly only the lower end portion at one side of the radiator is illustrated and is explained.

As shown in FIG. 19, the heat exchanger supporting structure and the vehicle front structure of the sixth embodiment provides an example in that the movable members, which have been explained in the embodiments, are fixed on radiator core side supports 1c and 1d or peripheral portions thereof.

A movable member 60 is formed with a support hole 60a that opens in a vertical direction and is used for supporting a vehicle mounting pin P2 provided on a lower surface of a radiator 2 through a mounting member 7 shown in FIG. 18, while it is further formed on a rear surface thereof with a pair of engagement portions 60b and 60c that are arranged at upper and lower sides, respectively, extending in a front and back direction.

On the other hand, engagement portions 61a and 61b are formed on the radiator core side supports 1c and 1d or peripheral portions thereof, for example a bumper stay 9, to be engageable with the engagement portions 60b and 60c of the movable member 60 from a rear side thereof. An engagement portion 61 c, which is shaped like a plate, is provided on each of the radiator core side supports 1c and 1d or the peripheral portions thereof in a state where it projects in a left and right direction. The radiator core side supports 1c and 1d or the peripheral portions correspond to a vehicle body of the present invention.

Further, a through hole 6 1 d is formed between the engagement portions 61a and 61 b to open in the left and right direction, and a through hole 60d is formed at a position corresponding to the through hole 61 d in the rear surface of the movable member 60.

As shown in FIG. 20, the engagement portions 60b and 60c of the movable member 60 are engaged with the engagement portions 61a and 61b from the rear side, respectively, so that a front end portion 60e of the movable member 60 contacts with the engagement portion 61c. Further, an engagement pin 62, which corresponds to the fixation releasing portion of the present invention, is inserted in and fixed to the movable member 60 through the through hole 60d and the through hole 60d. This enables the movable member 31 to be fixed to the radiator core side supports 1c and 1d or the peripheral portions in a state where it is restricted to move in the front and back direction and in the left and right direction.

Therefore, in the sixth embodiment, the engagement pins 62 are broken into parts at thin vulnerable portions 62a thereof when the radiator 2 moves rearward, thus the fixing state of the movable members 60 being released. After then, the movable members 31 slide and move rearward, maintaining a support state of a lower portion of the radiator 2. Thus they are disengaged from each other, so that the radiator 2 can be prevented from being damaged.

Incidentally, the engagement pin 62 may be replaced by a structure using the nail portion 40 that has been explained in the fourth embodiment.

While the embodiments have been explained, the present invention is not limited to the above-described embodiments. Design changes and modifications thereof are included in the present invention as long as they do not depart from the subject matter of the present invention.
For example, material of each construction parts and detail structure of the parts that have been explained are designed appropriately. The press members may be made of resin material such as polypropylene. In this case, they may be hollow ones. Similarly, the air guides may be made of resin foam material.

In addition, the heat exchanger is not limited to a radiator, while it may be a general heat exchanger such as a condenser, an integral heat exchanger that combines a radiator and a condenser, an intercooler and an oil cooler.

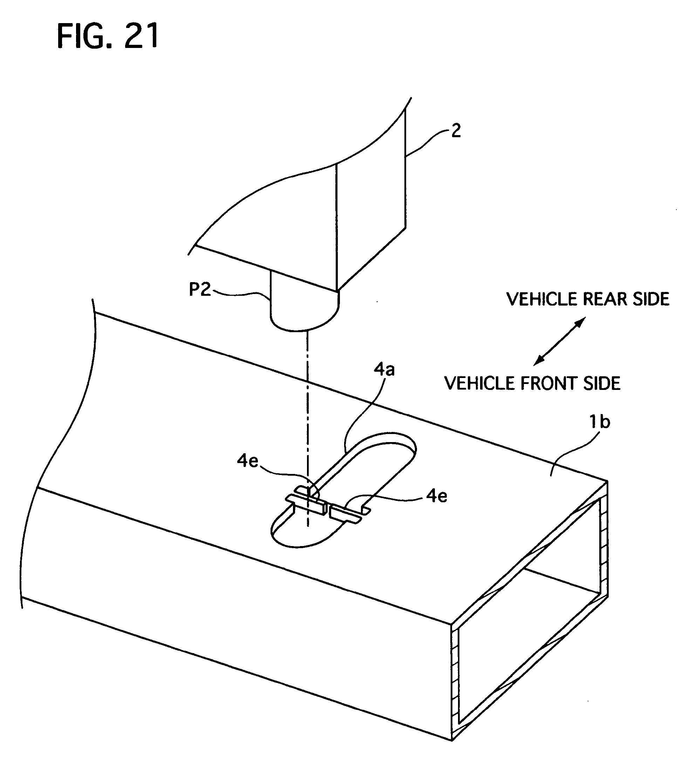

Further in a case where the radiator core lower support 1b is made of resin material, as shown in FIG. 21, the slide hole 4a and the stopper portion 4e, which have been explained in the first embodiment, of the bracket may be integrally formed on the radiator core lower support 1b. In this case, the stopper portion 4e is formed like a tongue made of resin material to disengage the fixation of the heat exchanger by using elastic force thereof.

## Claims

1. A heat exchanger supporting structure where a heat exchanger is arranged on a vehicle body at a vehicle front side, the heat exchanger supporting structure **characterized in that**
the heat changer is capable of moving a predetermined distance toward a vehicle rear side when external force acts on the heat exchanger from the vehicle front side.

2. The heat exchanger supporting structure according to claim 1, wherein
the heat exchanger is disengaged from the vehicle body after the heat exchanger moves the predetermined distance.

3. The heat exchanger supporting structure according to claim 1 or claim 2, wherein
the heat exchanger is arranged at the vehicle rear side of a bumper armature, wherein
a press member is installed between the bumper armature and the heat exchanger, and wherein
the bumper armature moves toward the vehicle rear side so that the bumper armature moves the heat exchanger through the press member toward the vehicle rear side.

4. The heat exchanger supporting structure according to claim 3, wherein
the heat exchanger, which is arranged at the vehicle rear side of the bumper armature, is fixed on a radiator core support, being capable of moving toward the vehicle rear side, in a state where the heat exchanger is arranged at one of just above a radiator core lower support of the radiator core support and at the vehicle front side, wherein
the press member is installed between the bumper armature and the heat exchanger, and wherein
the bumper armature moves toward the vehicle rear side to move the heat exchanger toward the vehicle rear side through the press member, when a motor vehicle collides.

5. The heat exchanger supporting structure according to claim 3, wherein
the press member is made of resin material.

6. The heat exchanger supporting structure according to claim 3, wherein
the press member is an air guide.

7. The heat exchanger supporting structure according to any one of claims 1 to 3, wherein
a movable member that is capable of moving is engaged with a supporting portion of the vehicle body, and wherein
the heat exchanger is supported on the movable member through an elastic member.

8. The heat exchanger supporting structure according to claim 7, wherein
the movable member is engaged by using an engage portion that disengages a support state when a predetermined external force acts thereon.

9. The heat exchanger supporting structure according to any one of claims 1 to 8, wherein
the heat exchanger is supported on a supporting structure that is capable of moving a predetermined distance toward the vehicle rear side, being restricted to move toward the vehicle front side.

10. A vehicle front structure comprising:
a bumper armature that is arranged at a vehicle front side;
a heat exchanger that is arranged at a vehicle rear side of the bumper armature;
a press member that is installed between the bumper armature and the heat exchanger; and
a fixation portion that fixes the heat exchanger on a vehicle body, wherein
the heat exchanger is provided with a supporting portion that is supported to be capable of moving a predetermined distance toward the vehicle rear side, maintaining a support state thereof, when the heat exchanger is disengaged from the fixation portion.
